Europäisches Patentamt

European Patent Office

Office européen des brevets

(11) Veröffentlichungsnummer: **0 407 726 A1**

# EUROPÄISCHE PATENTANMELDUNG

(21) Anmeldenummer: **90110430.7**

(22) Anmeldetag: **01.06.90**

(51) Int. Cl.5: **A01B 33/14**

(30) Priorität: **14.07.89 DE 3923220**

(43) Veröffentlichungstag der Anmeldung:
**16.01.91 Patentblatt 91/03**

(84) Benannte Vertragsstaaten:
**DE FR GB IT NL**

(71) Anmelder: **Amazonen-Werke H. Dreyer GmbH
& Co. KG KG
Am Amazonenwerk 9-13
D-4507 Hasbergen-Gaste(DE)**

(72) Erfinder: **Gattermann, Bernd
Eichenwall 3
D-2872 Hude 1(DE)**
Erfinder: **Giesecke, Reinhard
Eichenwall 4
D-2872 Hude 1(DE)**

(54) **Kreiselegge.**

(57) Kreiselegge mit mehreren in einem Querträger gelagerten und zwangsläufig über ein Getriebe rotierend angetreibenen Werkzeugkreiseln, welche Werkzeugträger aufweisen, an denen mittels zweier Schraubbolzen ein sogenannter Doppelzinken jeweils befestigt ist. Um auf einfache Weise bei schmalen Querstegen eines Doppekzinkens eine sichere Befestigung mit einer ausreichenden Abstützung des Quersteges am Werkzeugträger zu erreichen, ist vorgesehen, daß die Schraubbolzen (4) bezogen auf die Drehrichtung des Werkzeugkreisels (2) jeweils außerhalb der Mitte (9) des waagerechten Quersteges (6) und in der Nähe der Vorderseite (10) und auf der der Drehrichtung zugewandten Seite des Quersteges (6) angeordnet sind.

FIG. 2

# KREISELEGGE

Die Erfindung betrifft eine Kreiselegge gemäß des Oberbegriffes des Patentanspruches 1.

Eine derartige Kreiselegge ist beispielsweise durch die deutsche Offenlegungsschrift 22 59 545 (vgl. Fig.3 und 4) bekannt. Bei dieser Kreiselegge sind die Doppelzinken mittels zweier Schraubbolzen am Werkzeugträger befestigt. Die Schraubbolzen sind jeweils in der Mitte, d.h., in Mittel- bzw. Spiegelebene des Zinkens angeordnet. Um eine ausreichende Abstützfläche des Zinkens am Werkzeugträger zu erreichen, muß ein verhältnismäßig breiter Quersteg verwendet werden.

Der Erfindung liegt die Aufgabe zugrunde, auf einfache Weise bei schmalen Querstegen eines Doppekzinkens eine sichere Befestigung mit einer ausreichenden Abstützung des Quersteges am Werkzeugträger zu erreichen.

Diese Aufgabe wird erfindungsgemäß dadurch gelöst, daß die Schraubbolzen bezogen auf die Drehrichtung des Kreisels jeweils außerhalb der Mitte des waagerechten Quersteges und in der Nähe der Vorderseite und auf der der Drehrichtung zugewandten Seite des Quersteges angeordnet sind. Infolge dieser Maßnahme wird eine optimale Ausnutzung der Breite des Quersteges erreicht, wobei dann der Quersteg sich jeweils über seine größtmögliche Breite auf dem Werkzeugträger abstützen kann.

In bevorzugter Weise ist, um noch eine bessere Abstützung zu erreichen, erfindungsgemäß vorgesehen, daß auf der der Drehrichtung abgewandten Seite der Steg des Doppelzinkens unmittelbar hinter dem Bereich der Schrauben verbreitert ausgebildet ist. Hierdurch wird gewährleistet, daß bei minimalsten Materialaufwand auch für die schwierigsten Einsatzfälle eine sichere Abstützung des Zinkens gewährleistet ist. In einfacher Weise läßt sich diese Verbreiterung durch Ausschmieden des Steges im Bereich hinter der Befestigungsstelle erreichen. Diese Abstützfläche ist, bezogen auf die Drehrichtung des Werkzeugkreisels und des Zinkens, fluchtend hinter der Befestigungsstelle angeordnet.

Weitere Einzelheiten der Erfindung sind der Beispielsbeschreibung und den Zeichnungen zu entnehmen. Hierbei zeigen

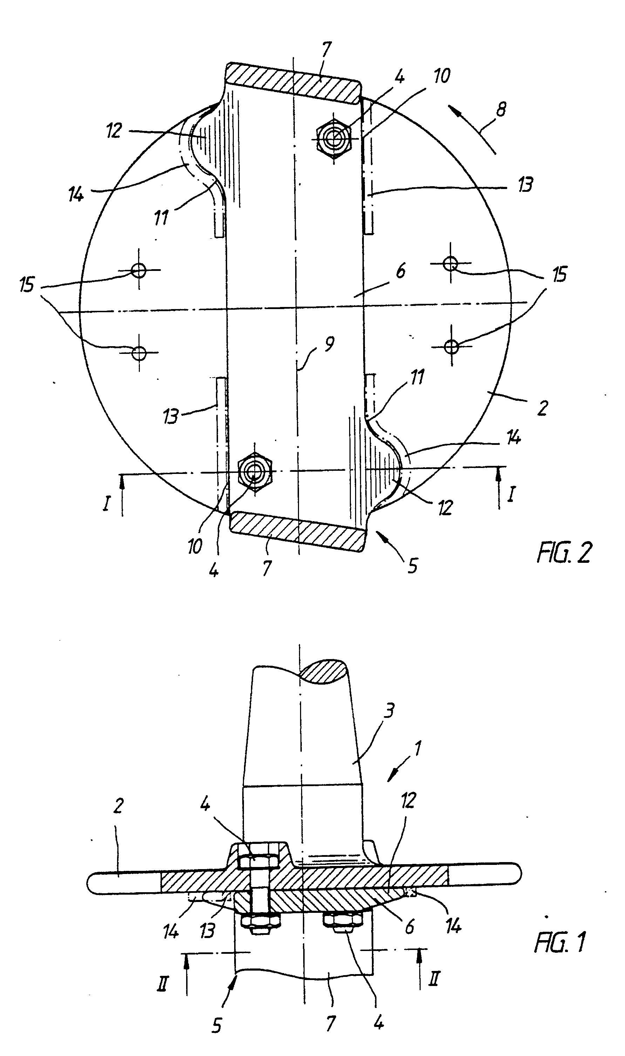

Fig. 1 einen Werkzeugkreisel ausschnittsweise im Schnitt I - I und

Fig. 2 den Werkzeugkreisel in der Ansicht von unten gemäß der Ansicht II - II.

Der Werkzeugkreisel 1 ist in bekannter und daher nicht dargestellter Weise im Querträger einer Kreiselegge gelagert. Die Werkzeugkreisel 1 sind in dem Querträger nebeneinander gelagert und werden in einander entgegengesetztem Drehsinn durch ein sich im Querträger befindliches Stirnradgetriebe zwangsläufig angetrieben. Der Werkzeugträger 2 des Werkzeugkreisels 1 weist die angeschmiedete Kreiselwelle 3 auf. An dem Werkzeugträger ist mittels der beiden Schraubbolzen 4 das als Doppelzinken 5 ausgebildete Bodenbearbeitungswerkzeug befestigt. Der Doppelzinken 5 weist den Quersteg 6 und die beiden im Abstand und sich im wesentlichen außerhalb des Werkzeugträgers sich nach unten erstreckenden zinkenartige Werkzeuge 7 auf.

Die Werkzeugkreisel 2 rotieren jeweils in der mit dem Pfeil 8 gekennzeichneten Drehrichtung. Jeweils ein Schraubbolzen 4 ist in der Nähe eines Zinkens 7 angeordnet und durchsetzt den Quersteg 6 und den Werkzeugträger 2. Jeder Schraubbolzen 4 ist bezogen auf die Drehrichtung 8 des Werkzeugkreisels 2 jeweils außerhalb der Mitte 9 des waagerechten Quersteges 6 und in der Nähe, bezogen auf die Drehrichtung 8, der Vorderseite 10 und der Drehrichtung 8 zugewandten Seite 10 des Quersteges 6 angeordnet. Des weiteren ist auch der der Drehrichtung 8 abgewandten Seite 11, fluchtend hinter dem Schraubbolzen 4 der Quersteg 6 verbreitert ausgebildet. Diese Verbreiterungsstelle 12 des Quersteges 6 hinter der durch den Schraubbolzen 4 jeweils gebildeten Befestigungsstelle ist durch Ausschmieden des Quersteges an dieser Stelle geworden. Diese, von der Verbreiterung 12 gebildeten Abstützfläche befindet sich fluchtend hinter dem Schraubbolzen 4. Somit wird auf einfachste Weise, selbst wenn der Quersteg 6 relativ schmal ausgebildet ist, eine sichere Befestigung und Abstützung des Quersteges (6) des Doppelzinkens 5 am Werkzeugträger 2 erreicht.

In einigen Fällen, vor allem für schwierige Einsatzfälle, kann es sinnvoll sein, zusätzlich im Außenbereich des Werkzeugträgers 2 die mit strichpunktierten Linien angedeuteten Stege 13 auf der Drehrichtung 8 vorderen Seite des Quersteges 6 und auf der Rückseite des Quersteges 6 die mit strichpunktierten Linien angedeuteten Stege 14 vorzusehen. Diese Stege 13 und 14 können entweder an dem Werkzeugträger 2 angeschweißt oder durch Schmieden unmittelbar an dem Werkzeugträger 2 angeschmiedet sein. Durch die Stege 13 und 14 wird für den Quersteg 9 des Doppelzinkens 5 noch eine zusätzliche Abstützung erreicht.

Des weiteren können um 90° versetzt zu den Schraubbolzen 4 im Außenbereich des Werkzeugträgers 2 noch zusätzliche Bohrungen 15 vorgesehen sein, um Zinken mit erkömmlicher Befestigungsart oder weitere Zinken anordnen zu können.

**Ansprüche**

1. Kreiselegge mit mehreren in einem Querträger gelagerten und zwangsläufig über ein Getriebe rotierend angetreibenen Werkzeugkreiseln, welche Werkzeugträger aufweisen, an denen mittels zweier Schraubbolzen ein sogenannter Doppelzinken jeweils befestigt ist, dadurch gekennzeichnet, daß die Schraubbolzen (4) bezogen auf die Drehrichtung des Werkzeugkreisels (2) jeweils außerhalb der Mitte (9) des waagerechten Quersteges (6) und in der Nähe der Vorderseite (10) und auf der der Drehrichtung zugewandten Seite des Quersteges (6) angeordnet sind.

2. Kreiselegge nach Anspruch 1, dadurch gekennzeichnet, daß auf der der Drehrichtung (8) abgewandten Seite (11) der Quersteg (6) des Doppelzinkens (5) hinter der Befestigungsstelle (4) (Schraubbolzen) verbreitert ausgebildet ist.

3. Kreiselegge nach Anspruch 1, dadurch gekennzeichnet, daß diese Verbreiterung (12) durch Ausschmieden des Quersteges (6) gebildet wird.

4. Kreiselegge nach Anspruch 1, dadurch gekennzeichnet, daß diese Abstützfläche (12) fluchtend hinter der Befestigungsstelle (Schraube) angeordnet sind.

EP 0 407 726 A1

FIG. 2

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-304120 (C. VAN DER LELY N.V.) <br> * Spalte 2, Zeile 50 - Spalte 3, Zeile 12; Figuren 2, 8, 9. * <br> --- | 1. | A01B33/14 |
| Y | GB-A-2151443 (C. VAN DER LELY N.V.) <br> * Seite 3, Zeilen 7 - 94; Figuren 4, 6, 8. * <br> --- | 1. | |
| A | EP-A-258645 (AMAZONEN-WERKE H. DREYER GMBH) <br> * Spalte 2, Zeile 25 - Spalte 4, Zeile 40; Figuren 3-6. * <br> --- | 2-4. | |
| A | DE-U-7827326 (RABEWERK HEINRICH CLAUSING) <br> ----- | | |

| | |
|---|---|
| | **RECHERCHIERTE SACHGEBIETE (Int. Cl.5 )** |
| | A01B |

Der vorliegende Recherchenbericht wurde für alle Patentansprüche erstellt

| Recherchenort | Abschlußdatum der Recherche | Prüfer |
|---|---|---|
| DEN HAAG | 19 OKTOBER 1990 | WOHLRAPP R.G. |